# FASCICULE DE BREVET EUROPEEN

(11) **EP 0 757 427 B1**
(45) Date de publication et mention de la délivrance du brevet: **20.05.1998**
(21) Numéro de dépôt: 96470011.6
(22) Date de dépôt: 17.06.1996
(51) Int. Cl.: H02M 3/07

(54) **Circuit générateur de phases pour circuit d'alimentation négative du type pompe de charge**
Phasengeneratorschaltung für eine negative Spannungsversorgungsschaltung des Ladungspumpen-Typs
Phase generator circuit for a negative voltage supply circuit of the charge pump type

(30) Priorité: 21.06.1995 FR 9507618
(43) Date de publication de la demande: 05.02.1997
(73) Titulaire: SGS-THOMSON MICROELECTRONICS S.A., 94250 Gentilly (FR)
(72) Inventeur: Guedj, Marc, 57000 Metz (FR); Brigati, Alessandro, 57000 Metz (FR); Aulas, Maxence, 57000 Metz (FR); Demange, Nicolas, 57000 Metz (FR)
(74) Mandataire: Schmit, Christian Norbert Marie

(56) Documents cités:
- US-A- 5 043 858
- US-A- 5 077 691

## Description

L'invention concerne les circuits électroniques alimentés par une tension et dans lesquels il est nécessaire de produire une tension négative. Plus particulièrement, elle concerne un circuit générateur de phases pour circuit d'alimentation négative du type pompe de charge.

On voit actuellement se développer dans des circuits intégrés l'emploi de circuits générateurs de haute tension négative du type pompe de charge. Ainsi, par exemple, le brevet US - 5 077 691 décrit une telle pompe et son application pour la programmation d'une mémoire EEPROM de type flash.

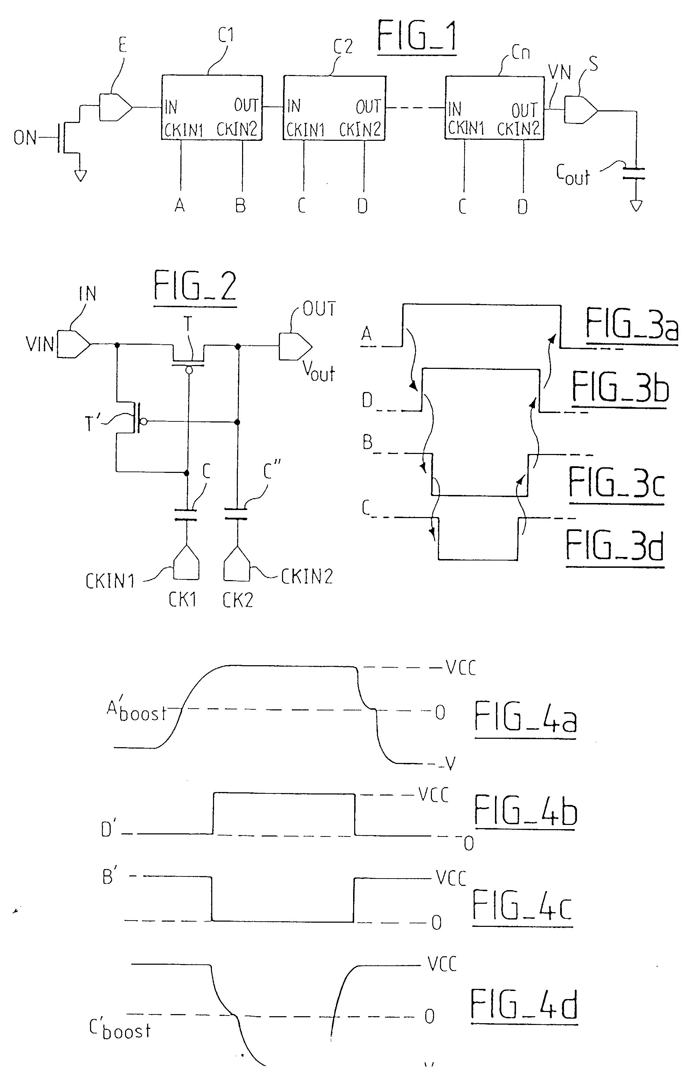

La figure 1 illustre schématiquement une structure de pompe connue, réalisée en technologie MOS à partir d'un substrat de type P. Elle comprend un ensemble de n (n nombre entier) cellules élémentaires C1 à Cn, dont la structure est illustrée figure 2. Ces cellules sont montées en série entre une entrée E et une sortie S. Le but d'un tel circuit est classiquement d'alimenter un circuit de type capacitif, schématisé sur la figure 1 par une capacité C_{OUT}, avec une tension négative VN produite à partir d'une tension d'alimentation positive VCC et d'une tension de référence ou masse. Ces cellules reçoivent des signaux de pilotages, ou phases, A, B, C, D (illustrés sur les chronogrammes 3a à 3d) commutant cycliquement entre 0 volts (masse) et VCC.

Une cellule élémentaire, illustrée sur la figure 2, comprend :
- une entrée IN pour recevoir une tension V_{IN},
- une sortie OUT pour fournir une tension V_{OUT}, et
- deux entrées CKIN1 et CKIN2 pour recevoir des signaux d'horloge CK1 et CK2.

La cellule illustrée figure 2 comprend :
- un premier transistor T de type P dont le drain est relié à l'entrée IN et dont la source est reliée à la sortie OUT,
- un deuxième transistor T' de type P dont la source est reliée à l'entrée IN, dont le drain est relié à la grille de commande du premier transistor T, et dont la grille de commande est reliée à la sortie OUT,
- une première capacité Ca dont un premier pôle est relié à la grille de commande du transistor T, et dont le deuxième pôle est relié à l'entrée CKIN1,
- une deuxième capacité Cb dont un premier pôle est relié à la sortie OUT, et dont le deuxième pôle est relié à l'entrée CKIN2.

En pratique, les capacités Ca et Cb sont réalisées à l'aide de transistors de type P, le premier pôle de ces capacités correspondant à une grille de commande et le deuxième pôle correspondant à un drain et une source reliés entre eux.

Les signaux CK1 et CK2 seront soit respectivement les phases A et B illustrées figures 3a et 3c, soit les phases C et D illustrées figure 3d et 3b.

Chaque cellule est donc pilotée par un couple de phases (A, B) ou (C, D), les phases pilotant une cellule donnée étant non recouvrantes à l'état bas (c'est à dire que les phases A et B, ou C et D, ne sont pas à 0 simultanément).

En supposant que les phases A et D sont initialement à 0 volts et que les phases B et C sont initialement à VCC, les phases A, B, C et D sont telles que :
- la montée à VCC de la phase A entraîne la montée à VCC de la phase D,
- la montée à VCC de la phase D entraîne la descente à 0 de la phase B,
- la descente à 0 de la phase B entraîne la descente à 0 de la phase C, cette phase C remontant à VCC après un certain délai,
- la remontée à VCC de la phase C entraîne la montée à VCC de la phase B,
- la montée à VCC de la phase B entraîne la descente à 0 de la phase D,
- la descente à 0 de la phase D entraîne la descente à 0 de la phase A, cette phase A remontant postérieurement à VCC et ainsi de suite.

Dans une cellule, les charges négatives sont transférées de l'entrée IN sur front descendant du signal CK1 (c'est à dire de A ou de C), le transistor T étant alors passant. Sur front montant de ce signal CK1 le transistor T est bloqué. Sur front descendant du signal CK2 (c'est à dire de B ou de D), la tension de sortie V_{OUT} augmente en valeur absolue de VCC.

Des cellules consécutives recevant des signaux de polarités opposées sur leurs entrées CKIN1 et CKIN2, elles sont successivement reliées deux à deux. Chaque cellule est alternativement reliée à celle qui lui succède et à celle qui la précède. L'entrée de la première cellule C1 est reliée à l'entrée E, celle ci étant reliée à la masse. On transfère progressivement les charges négatives d'une cellule à l'autre et la tension de sortie négative VN (tension présente en sortie de la dernière cellule Cn) va progressivement croître en valeur absolue.

Une tendance actuelle est de produire des circuits fonctionnant pour de larges plages de tension d'alimentation, et plus particulièrement capables de fonctionner pour de faibles tensions d'alimentation, de l'ordre par exemple de 3 volts, voire moins.

Le type de pompe décrit ci-dessus fonctionne correctement tant que la tension d'alimentation VCC est suffisamment élevée pour rendre le transistor T de chaque cellule passant, c'est à dire pour créer une différence de potentiel drain-grille supérieure à la tension de seuil de ce transistor.

Un but de l'invention est de proposer un circuit générateur de phases pour cadencer le fonctionnement du circuit d'alimentation tel que décrit ci-dessus et qui permette d'utiliser ce circuit d'alimentation pour de faibles tension d'alimentation.

Ainsi, l'invention concerne un circuit générateur de phases pour circuit d'alimentation négative du type pompe de charge, ce circuit produisant cycliquement un premier et un deuxième couples de phases, comprenant un premier circuit pour produire une première phase de chaque couple de phases, ces premières phases étant non recouvrantes à l'état bas et commutant entre une tension 0 et une tension VCC, et des second et troisième circuits pour produire à partir des premières phases respectivement la deuxième phase du premier et du deuxième couple de phases, chaque deuxième phase étant non recouvrante à l'état bas avec la première phase de leur couple respectif et commutant entre une tension négative -V et la tension VCC.

D'autres particularités et avantages apparaîtront à la lecture de la description qui suit, à lire conjointement aux dessins annexés dans lesquels :
- la figure 1 représente schématiquement d'un circuit générateur de tension négative de type pompe de charge selon l'état de l'art,
- la figure 2 représente un schéma détaillé d'une cellule de base de la pompe de la figure 1,
- les figures 3a à 3d représentent des chronogrammes de signaux de pilotage, ou phases, de la pompe de la figure de la figure 1,
- les figures 4a à 4d représentent des chronogrammes de phases produites par un circuit générateur de phases selon l'invention,
- la figure 5 représente schématiquement la structure d'un circuit générateur de phases selon l'invention,
- les figures 6, 7, 8a et 8b représentent schématiquement des circuits internes du circuit de la figure 5.

La figure 1 illustre schématiquement une structure de pompe connue, réalisée par exemple en technologie MOS à partir d'un substrat de type P. Elle comprend un ensemble de n (n nombre entier) cellules élémentaires C1 à Cn, dont la structure est illustrée figure 2. Ces cellules sont montées en série entre une entrée E et une sortie S. Le but d'un tel circuit est classiquement d'alimenter un circuit de type capacitif, schématisé sur la figure 1 par une capacité C_{OUT}, avec une tension négative VN produite à partir d'une tension d'alimentation positive VCC et d'une tension de référence ou masse. Ces cellules reçoivent des signaux de pilotages, ou phases, A, B, C, D (illustrés sur les chronogrammes 3a à 3d) commutant cycliquement entre 0 volts (masse) et VCC.

Chaque cellule est donc pilotée par un couple de phases (A, B) ou (C, D), les phases pilotant une cellule donnée étant non recouvrantes à l'état bas (c'est à dire que les phases A et B, ou C et D, ne sont pas à 0 simultanément).

Une cellule élémentaire, illustrée sur la figure 2, comprend :
- une entrée IN pour recevoir une tension V_{IN},
- une sortie OUT pour fournir une tension V_{OUT}, et
- deux entrées CKIN1 et CKIN2 pour recevoir des signaux d'horloge CK1 et CK2.

La cellule illustrée figure 2 comprend :
- un premier transistor T de type P dont le drain est relié à l'entrée IN et dont la source est reliée à la sortie OUT,
- un deuxième transistor T' de type P dont la source est reliée à l'entrée IN, dont le drain est relié à la grille de commande du premier transistor T, et dont la grille de commande est reliée à la sortie OUT,
- une première capacité Ca dont un premier pôle est relié à la grille de commande du transistor T, et dont le deuxième pôle est relié à l'entrée CKIN1,
- une deuxième capacité Cb dont un premier pôle est relié à la sortie OUT, et dont le deuxième pôle est relié à l'entrée CKIN2.

En pratique, les capacités Ca et Cb sont réalisées à l'aide de transistors de type P, le premier pôle de ces capacités correspondant à une grille de commande et le deuxième pôle correspondant à un drain et une source reliés entre eux.

Les signaux CK1 et CK2 seront soit respectivement les phases A et B illustrées figures 3a et 3c, soit les phases C et D illustrées figure 3d et 3b.

En supposant que les phases A et D sont initialement à 0 et que les phases B et C sont initialement à VCC, les phases A, B, C et D sont telles que :
- la montée à VCC de la phase A entraîne la montée à VCC de la phase D,
- la montée à VCC de la phase D entraîne la descente à 0 de la phase B,
- la descente à 0 de la phase B entraîne la descente à 0 de la phase C, cette phase C remontant à VCC après un certain délai,
- la remontée à VCC de la phase C entraîne la montée à VCC de la phase B,
- la montée à VCC de la phase B entraîne la descente à 0 de la phase D,
- la descente à 0 de la phase D entraîne la descente à 0 de la phase A, cette phase A remontant postérieurement à VCC et ainsi de suite.

Dans une cellule, les charges négatives sont transférées de l'entrée IN sur front descendant du signal CK1 (c'est à dire de A ou de C), le transistor T étant alors passant. Sur front montant de ce signal CK1 le transistor T est bloqué. Sur front descendant du signal CK2 (c'est à dire de B ou de D), la tension de sortie V_{OUT} augmente en valeur absolue de VCC.

Des cellules consécutives recevant des signaux de polarités opposées sur leurs entrées CKIN1 et CKIN2, elles sont successivement reliées deux à deux. Chaque cellule est alternativement reliée à celle qui lui succède et à celle qui la précède. L'entrée de la première cellule C1 est reliée à l'entrée E, celle ci étant reliée à la masse. On transfère progressivement les charges négatives d'une cellule à l'autre et la tension de sortie négative VN (tension présente en sortie de la dernière cellule Cn) va progressivement croître en valeur absolue.

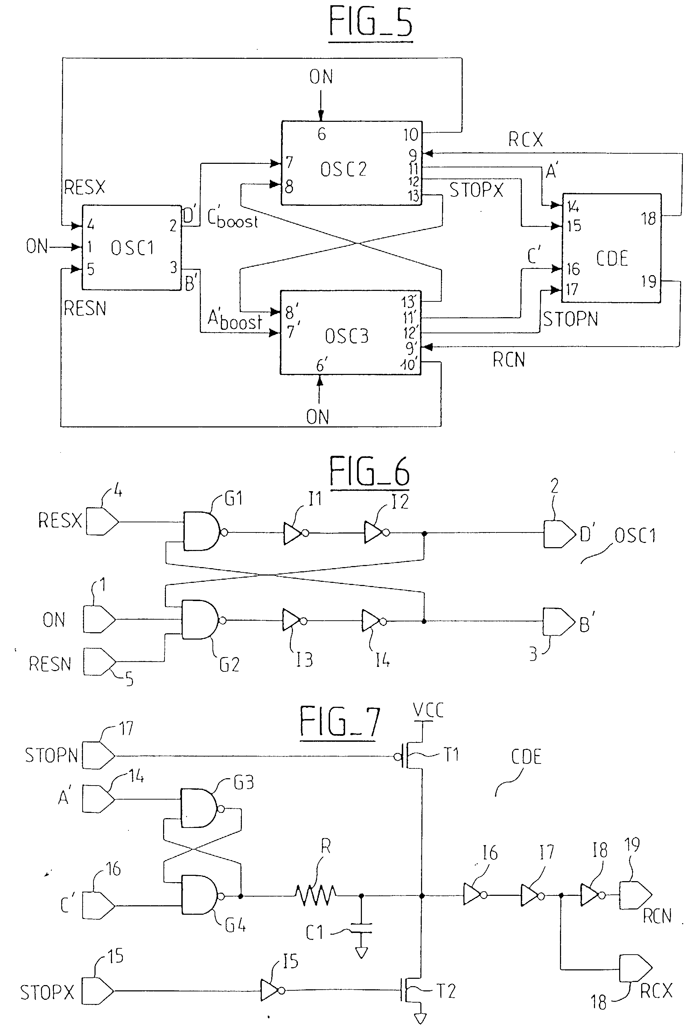

la figure 5 illustre schématiquement un circuit générateur de phases réalisé conformément à l'invention. Ce circuit pourra être réalisé par exemple en technologie MOS à partir d'un substrat de type P. Il pourra être mis en oeuvre dans un circuit intégré comprenant une pompe de charge telle que celle décrite en référence aux figures 1 et 2, pour produire les signaux de pilotage d'une telle pompe. Ce circuit intégré sera par exemple une mémoire.

Le circuit illustré sur la figure 5 produit quatre phases A'_{boost}, B', C'_{boost}, D' illustrées par les figures 4a à 4d. Ces phases sont semblables quant à leur enchaînement aux phases A, B, C, D illustrées sur les figures 3a à 3d. Les phases A'_{boost} et C'_{boost}, dont les états pilotent le transfert de charges dans les cellules C1 à Cn de la pompe illustrée sur la figure 1, commutent entre une tension négative -V et la tension d'alimentation VCC (et non entre la tension 0 et la tension VCC comme les phases A et C illustrées sur les figures 3a et 3d).

Ainsi, en supposant que la phase A'_{boost} (illustrée sur la figure 4a) est à un potentiel -V négatif, que la phase D' (illustrée sur la figure 4b) est initialement à 0 et que les phases B' et C'_{boost} (illustrées sur les figures 4c et 4d) sont initialement à VCC, les phases A'_{boost}, B', C'_{boost} et D' sont telles que :
- la montée à VCC de la phase A'_{boost} entraîne la montée à VCC de la phase D',
- la montée à VCC de la phase D' entraîne la descente à 0 de la phase B',
- la descente à 0 de la phase B' entraîne la descente à -V de la phase C'_{boost}, cette phase C'_{boost} remontant à VCC après un certain délai,
- la remontée à VCC de la phase C'_{boost} entraîne la montée à VCC de la phase B',
- la montée à VCC de la phase B' entraîne la descente à 0 de la phase D',
- la descente à 0 de la phase D' entraîne la descente à -V de la phase A'_{boost}, cette phase A'_{boost} remontant postérieurement à VCC et ainsi de suite.

Le générateur de phases illustré sur la figure 5 comprend un circuit OSC1 pour produire les phases B' et D', un circuit OSC2 pour produire la phase A'_{boost}, et un circuit OSC3 pour produire la phase C'_{boost}. Enfin, il comprend un circuit CDE de commande produisant des signaux de commande fournis aux circuits OSC2 et OSC3 comme on le verra plus loin.

Avant de décrire le fonctionnement du circuit de la figure 5, on va décrire un exemple de réalisation de ce circuit.

Un exemple de réalisation du circuit OSC1 est illustré sur la figure 6.

Le circuit OSC1 comprend trois entrées et deux sorties. Une entrée 1 reçoit un signal logique de commande ON. Une sortie 2 fournit la phase D'. Une sortie 3 fournit la phase B'. Une entrée 4 reçoit un signal de commande RESX fourni par le circuit OSC2. Une entrée 5 reçoit un signal de commande RESN fourni par le circuit OSC3.

Le circuit OSC1 comprend une porte NON ET G1 à deux entrées recevant sur ses entrées le signal RESX et la phase B'. La sortie de cette porte G1 est reliée à deux inverseurs I1 et I2 montés en série, la sortie du deuxième inverseur I2 fournissant la phase D'. Le circuit OSC1 comprend par ailleurs une deuxième porte logique G2 à trois entrées recevant sur ses entrées les signaux ON, RESN et la phase D'. La sortie de cette porte G2 est reliée à deux inverseurs I3 et I4 montés en série, la sortie du deuxième inverseur I4 fournissant la phase B'.

Un exemple de réalisation du circuit CDE est illustré sur la figure 7.

Le circuit CDE de commande comprend quatre entrées et deux sorties.

Il reçoit sur deux entrées 14 et 15 un signal de commade A' et un signal de commande STOPX, produits par le circuit OSC2. Il reçoit sur deux entrées 16 et 17 un signal de commade C' et un signal de commande STOPN, produits par le circuit OSC3. Enfin, il fournit sur deux sorties 18 et 19 deux signaux de commande RCX et RCN.

Le circuit CDE comprend deux portes logiques NON ET G3 et G4 à deux entrées. La porte logique G3 reçoit le signal A' sur une entrée et a son autre entrée reliée à la sortie de la porte G4. La porte logique G4 reçoit le signal C' sur une entrée et a son autre entrée reliée à la sortie de la porte G3. La sortie de la porte G4 est reliée au premier pôle d'une résistance R. Cette résistance R a son deuxième pôle relié au premier pôle d'une capacité C1. Cette capacité C1 a son deuxième pôle relié à la masse. Le premier pôle de la capacité C1 (correspondant à la sortie du circuit RC formé de la résistance R et de la capacité C1) est relié à trois inverseurs I6, I7 et I8 montés en série. La sortie du deuxième inverseur I7 fournit le signal RCX, et la sortie du troisième inverseur I8 fournit le signal RCN, complémentaire du signal RCX. Enfin, le circuit CDE comprend deux transistors T1 et T2 de types respectifs P et N. Le premier transistor T1 a son drain relié à l'entrée de l'inverseur I6 et sa source reçoit la tension d'alimentation VCC. Sa grille de commande reçoit le signal STOPN. Le deuxième transistor T2 a son drain relié à l'entrée de l'inverseur I6 et sa source est reliée à la masse. Sa grille de commande reçoit le signal complémentaire du signal STOPX, ce signal complémentaire étant produit par un inverseur I5 dont l'entrée est reliée à l'entrée 15.

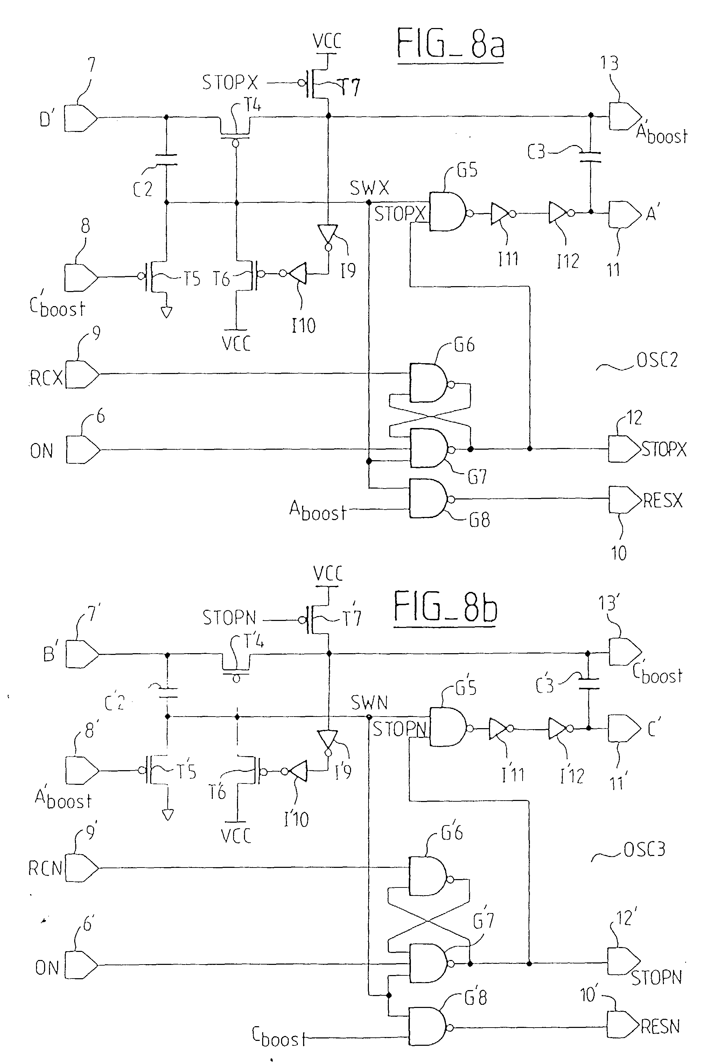

Un exemple de réalisation du circuit OSC2 est illustré sur la figure 8A.

Le circuit OSC2 comprend quatre entrées et quatre sorties. Une entrée 6 reçoit le signal ON. Une entrée 7 reçoit la phase D' produite par le circuit OSC1. Une entrée 8 reçoit la phase C'_{boost} produite par le circuit OSC3. Enfin, une entrée 9 reçoit le signal RCX produit par le circuit CDE. Une sortie 10 fournit le signal RESX. Une sortie 11 fournit le signal A'. Une sortie 12 fournit le signal STOPX. Une sortie 13 fournit la phase A'_{boost}.

Le circuit OSC2 comprend quatre transistors T4, T5, T6 et T7, de type P. Un premier transistor T4 a sa source reliée à l'entrée 7. Son drain est relié à la sortie 13. Sa grille de commande est reliée au deuxième pôle d'une capacité C2 dont le premier pôle est relié à l'entrée 7. On note SWX le signal présent sur le deuxième pôle de la capacité C2. Le deuxième transistor T5 a sa source reliée à la masse. Son drain est relié au deuxième pôle de la capacité C2. Sa grille de commande est reliée à l'entrée 8. Le troisième transistor T6 reçoit la tension VCC sur sa source. Son drain est relié au deuxième pôle de la capacité C2. Sa grille de commande est reliée au drain du transistor T4 par le biais de deux inverseurs I9 et I10 montés en série. La grille de commande du transistor T6 reçoit donc la phase A'_{boost}, retardée par les inverseurs I9 et I10. La quatrième transistor T7 reçoit la tension VCC sur sa source. Son drain est relié au drain du transistor T4. Sa grille de commande est reliée à la sortie 12, et reçoit donc le signal STOPX.

Le circuit OSC2 comprend une porte logique NON ET G5 à deux entrées, dont une première entrée est reliée à la grille de commande du transistor T4 (et reçoit donc le signal SWX), et dont la deuxième entrée est reliée à la sortie 12 (et reçoit donc le signal STOPX). La sortie de la porte G5 est reliée à la sortie 11 par le biais de deux inverseurs I11 et I12 montés en série. La sortie 11 est par ailleurs reliée à la sortie 13 par le biais d'une capacité C3.

Le circuit OSC2 produit les signaux STOPX et RESX à partir des signaux ON, RCX, SWX, et de la phase A'_{boost}. Pour ce faire, il comprend deux portes logiques NON ET G6 et G8 à deux entrées, et une porte logique NON ET G7 à trois entrées. La porte G6 reçoit le signal RCX sur une entrée. Son autre entrée est reliée à la sortie de la porte G7. La porte G7 reçoit le signal ON sur une entrée. Il a une autre entrée reliée à la sortie de la porte G6. Enfin, sa dernière entrée reçoit le signal SWX. La porte G8 reçoit le signal SWX sur une entrée et la phase A'_{boost} sur son autre entrée. La sortie de la porte G7 fournit le signal STOPX. La sortie de la porte G8 fournit le signal RESX.

Le circuit OSC3, illustré sur la figure 8b, a une structure similaire à celle du circuit OSC2.

Le circuit OSC3 comprend quatre entrées et quatre sorties. Une entrée 6' reçoit le signal ON. Une entrée 7' reçoit la phase B' produite par le circuit OSC1. Une entrée 8' reçoit la phase A'_{boost} produite par le circuit OSC2. Enfin, une entrée 9' reçoit le signal RCX produit par le circuit CDE. Une sortie 10' fournit le signal RESN. Une sortie 11' fournit le signal C'. Une sortie 12' fournit le signal STOPN. Une sortie 13' fournit la phase C'_{boost}.

Le circuit OSC3 comprend quatre transistors T'4, T'5, T'6 et T'7, de type P. Un premier transistor T'4 a sa source reliée à l'entrée 7'. Son drain est relié à la sortie 13'. Sa grille de commande est reliée au deuxième pôle d'une capacité C'2 dont le premier pôle est relié à l'entrée 7'. On note SWN le signal présent sur le deuxième pôle de la capacité C'2. Le deuxième transistor T'5 a sa source reliée à la masse. Son drain est relié au deuxième pôle de la capacité C'2. Sa grille de commande est reliée à l'entrée 8'. Le troisième transistor T'6 reçoit la tension VCC sur sa source. Son drain est relié au deuxième pôle de la capacité C'2. Sa grille de commande est reliée au drain du transistor T'4 par le biais de deux inverseurs I'9 et I'10 montés en série. La grille de commande du transistor T'6 reçoit donc la phase C'_{boost}, retardée par les inverseurs I'9 et I'10. La quatrième transistor T'7 reçoit la tension VCC sur sa source. Son drain est relié au drain du transistor T'4. Sa grille de commande est reliée à la sortie 12', et reçoit donc le signal STOPN.

Le circuit OSC3 comprend une porte logique NON ET G'5 à deux entrées, dont une première entrée est reliée à la grille de commande du transistor T'4 (et reçoit donc le signal SWN), et dont la deuxième entrée est reliée à la sortie 12' (et reçoit donc le signal STOPN). La sortie de la porte G'5 est reliée à la sortie 11' par le biais de deux inverseurs I'11 et I'12 montés en série. La sortie 11' est par ailleurs reliée à la sortie 13' par le biais d'une capacité C'3.

Le circuit OSC3 produit les signaux STOPN et RESN à partir des signaux ON, RCN, SWN, et de la phase C'_{boost}. Pour ce faire, il comprend deux portes logiques NON ET G'6 et G'8 à deux entrées, et une porte logique NON ET G'7 à trois entrées. La porte G'6 reçoit le signal RCN sur une entrée. Son autre entrée est reliée à la sortie de la porte G'7. La porte G'7 reçoit le signal ON sur une entrée. Il a une autre entrée reliée à la sortie de la porte G'6. Enfin, sa dernière entrée reçoit le signal SWN. La porte G'8 reçoit le signal SWN sur une entrée et la phase C'_{boost} sur son autre entrée. La sortie de la porte G'7 fournit le signal STOPN. La sortie de la porte G'8 fournit le signal RESN.

Ayant décrit un exemple de réalisation du circuit générateur de phases illustré par la figure 5, on va maintenant décrire son fonctionnement.

On supposera que le signal ON est à l'état haut, c'est à dire qu'il est à VCC. Ce signal permet d'arrêter ou de déclencher la production des phases telles qu'elles sont illustrées sur les figures 4a à 4d. En tout état de cause on pourra très bien se passer de ce signal (les portes G2, G7 et G'7 étant alors des portes à deux entrées) et produire continuellement les phases, l'inconvénient d'une telle solution étant bien sûr de consommer en permanence.

On supposera par ailleurs que la phase A'_{boost} est à l'état bas (-V, avec -V supérieure ou égale à - VCC), la sortie de la porte G5 étant à 0 volts, que les phases B' et C'_{boost} sont à l'état haut (VCC), que la phase D' est à l'état bas (0 volts), que les signaux RCX, RESX, STOPX et SWX sont à VCC, que les signaux RESN, STOPN et C' sont à VCC, que les signaux RCN, A' et SWN sont à 0 volts, et que la tension aux bornes de la capacité C1 est initialement égale à VCC.

Les entrées de la porte G4 étant à VCC, la tension aux bornes de la capacité C1 va s'annuler. Le signal RCX va donc passer à 0 volts (le signal RCN passant à VCC). La sortie de la porte G6 va donc passer à VCC. Le signal STOPX passe donc de VCC à 0 volts.

Le signal STOPX passant à 0 volts, la sortie de la porte G5 va passer de 0 volts à VCC, et la phase A'_{boost} va passer à 0. Parallèlement, le transistor T7 devenant passant, la phase A'_{boost} va progressivement monter à VCC (précharge de la capacité C3).

La phase A'_{boost} passe de -V à 0, puis à VCC, et le signal RESX va passer à 0 volts. Parallèlement le transistor T'5 devient passant, et le signal SWN est donc maintenu à 0 volts.

Quand le signal STOPX passe à 0 volts, le transistor T2 (initialement bloqué, ainsi que le transistor T1) devient passant, ce qui maintient le signal RCX à 0 volts.

Le signal RESX passant à 0 volts, le signal produit par la porte G1 va passer à VCC. Par suite, la phase D' va passer de 0 volts à VCC, après un certain retard, induit par la présence des inverseurs I1 et I2.

La phase D' passant de 0 volts à VCC, la sortie de la porte G2 va passer de 0 volts à VCC. La phase B' va donc passer de 0 volts à VCC, avec un certain retard, induit par la présence des inverseurs I3 et I4.

Quand la phase B' passe de VCC à 0 volts, le signal SWN, initialement à 0 volts, va passer à -VCC (phase de bootstrap négatif de la phase B', bootstrap signifiant auto-élévation capacitive). Le transistor T'4 devient alors passant, et on ramène la phase C'_{boost} de VCC à 0 volts. Le transistor T'6 va devenir passant, ce qui porte le signal SWN à VCC. Le signal STOPN étant à VCC, le signal en sortie de la porte G'5 va passer à 0 volts, ce qui a pour effet d'entraîner la chute de la phase C'_{boost} à -V, la valeur de -V étant fonction de la valeur de la capacité C3. En tout état de cause -V ne pourra être supérieure en valeur absolue à VCC.

La chute du signal C' entraîne parallèlement la montée progressive de la tension aux bornes de la capacité C1 à VCC. De ce fait, avec un certain retard par rapport à la chute de C', les signaux RCX et RCN vont changer d'état. RCN va descendre à 0 volts, et RCX va monter à VCC. La descente du signal RCN va entraîner la descente à 0 volts du signal STOPN. Le transistor T1 est alors passant, ce qui maintient l'état des signaux RCN et RCX.

La sortie de la porte G'5 bascule quand le signal STOPN passe à 0 volts. Le signal C' va donc passer à VCC et le transistor T'7 va devenir passant. En conséquence, la phase C'_{boost} passe à VCC.

Le signal SWN étant monté à VCC, et la phase C'_{boost} passant elle aussi à VCC, la sortie de la porte G'8 va basculer, le signal RESN passant alors de VCC à 0 volts. De ce fait, la phase B' va passer à VCC, avec un certain retard induit par la présence des inverseurs I3 et I4.

Parallèlement, la montée de la phase C'_{boost} entraîne le blocage du transistor T'6. Le signal SWN va donc redescendre à 0 volts, le transistor T'5 étant passant. De ce fait, le signal STOPN va remonter à VCC, ce qui bloque le transistor T1.

La montée à VCC de la phase B' entraîne, par le biais de la porte G1 et des inverseurs I1 et I2, la descente de la phase D' à 0 volts, après un certain retard.

La descente de la phase D' va entraîner la descente à 0 volts de la phase A'_{boost}, le transistor T5 ayant préchargé le deuxième pôle de la capacité C2 à 0 volts. En effet, la descente de la phase D' va entraîner la descente à - VCC du signal SWX, qui rend la transistor T4 passant (par bootstrap négatif de la phase D'). La phase A'_{boost} va donc passer de VCC à 0 volts.

La phase A'_{boost} passant à 0 volts, le transistor T6 va devenir passant, ce qui porte le signal SWX à VCC. Le signal STOPX étant à VCC, le signal en sortie de la porte G5 va passer à 0 volts, ce qui a pour effet d'entrainer la chute de la phase A'_{boost} à -V, la valeur de -V étant fonction de la valeur de la capacité C3.

On retrouve donc les hypothèses de départ. Un autre cycle va démarrer. La tension aux bornes de la capacité C1, qui a été chargée à VCC par le transistor T1, va progressivement chuter à 0 volts, la sortie de la porte G4 étant à 0 volts. De ce fait le signal RCX va repasser à 0 volts, ce qui va entraîner la descente à 0 volts du signal STOPX. La sortie de la porte G5 va donc basculer et la phase A'_{boost} va passer à 0 volts, puis à VCC, le transistor T7 devenant passant.

On remarquera qu'en utilisant les signaux de commande A' et C' au lieu de A'_{boost} et C'_{boost} pour piloter une pompe de charge, on réalise la commande classique d'une pompe telle que décrite en référence aux figures 3a à 3d. Cette particularité est particulièrement intéressante si on souhaite utiliser une tension d'alimentation VCC variable. Pour des tensions d'alimentation basses, par exemple de 3 volts, on utilisera les phases A'_{boost}, B', C'_{boost} et D'. Pour des tensions d'alimentation plus élevées, par exemple de 5 volts, il est préférable d'utiliser A', B', C' et D'. En effet, la différence de potentiel entre les états bas et hauts de A'_{boost} et C'_{boost} pourra alors atteindre une valeur telle , 10 volts dans l'exemple considéré, qu'il soit nécessaire d'utiliser des transistors haute tension dans les cellules de pompage, particulièrement si les temps de passage d'un état à l'autre sont rapides. Or, ces transistors sont généralement plus encombrants et moins performants en terme de temps de commutation. Dans l'hypothèse d'une tension d'alimentation élevée, il est donc plus intéressant de limiter les amplitudes des phases en utilisant des phases de pilotage non bootstrapées négativement.

## Revendications

1. Circuit générateur de phases pour circuit d'alimentation négative du type pompe de charge, ce circuit produisant cycliquement un premier et un deuxième couples ((A'_{boost}, B') (C'_{boost}, D')) de phases, comprenant un premier circuit (OSC1) pour produire une première phase (B', D') de chaque couple de phases, ces premières phases étant non recouvrantes à l'état bas et commutant entre une tension 0 et une tension VCC, et des second et troisième circuits (OSC2, OSC3) pour produire à partir des premières phases (B', D') respectivement la deuxième phase (A'_{boost}, C'_{boost}) du premier et du deuxième couple de phases, chaque deuxième phase (A'_{boost}, C'_{boost}) étant non recouvrante à l'état bas avec la première phase (B', D') de leur couple respectif et commutant entre une tension négative -V et la tension VCC.

2. Circuit selon la revendication 1, caractérisé en ce que les deuxièmes phases (A'_{boost}, C'_{boost}) sont produites par auto-élévation capacitive négative des premières phases (B', D').

3. Circuit selon la revendication 2, caractérisé en ce que les seconds et troisièmes circuits (OSC2, oSC3) comprennent :
- des moyens (T7, T'7) de précharge à la tension VCC de deuxièmes pôles de capacités (C3, C'3),
- des moyens (T4, T'4) pour relier sélectivement les deuxièmes pôles des capacités à des entrées (7, 7'), ces entrées recevant les premières phases (D', B'), quand les premières phases (D', B') commutent de la tension VCC à la tension 0, de manière à ramener le potentiel des deuxièmes phases à la tension 0, et
- des portes logiques (G5, G'5) dont les sorties sont reliées aux premiers pôles de ces capacités (C3, C'3) et commutent de la tension VCC à la tension 0, une fois les deuxièmes phases ramenées à la tension 0, pour amener ces deuxièmes phases à une tension négative.

4. Circuit selon la revendication 3, caractérisé en ce que les moyens (T4, T'4) pour relier sélectivement les deuxièmes pôles des capacités aux entrées (7, 7') sont des transistors dont les grilles de commande sont commandées par auto-élévation capacitive négative des premières phases (D', B').

## Patentansprüche

1. Phasengeneratorschaltkreis für einen negativen Spannungsversorgungsschaltkreis vom Ladungspumpentyp, wobei dieser Schaltkreis zyklisch ein erstes und ein zweites Phasenpaar ((A'_{boost}, B'); (C'_{boost}, D')) erzeugt, der einen ersten Schaltkreis (OSC1) zum Erzeugen einer ersten Phase (B', D') bei jedem Phasenpaar, wobei diese ersten Phasen nicht auf den niedrigen Zustand zurückkehren und umschalten zwischen einer Spannung 0 und einer Spannung VCC, und einen zweiten und einen dritten Schaltkreis (OSC2, OSC3) zum Erzeugen aus den ersten Phasen (B', D') jeweils der zweiten Phase (A'_{boost}, C'_{boost}) des ersten und des zweiten Phasenpaares umfaßt, wobei jede zweite Phase (A'_{boost}, C'_{boost}) nicht auf den niedrigen Zustand zurückkehrt und die erste Phase (B', D') des jeweiligen Paares nicht auf den niedrigen Zustand zurückkehrt und zwischen einer negativen Spannung -V und der Spannung VCC umschaltet.

2. Schaltkreis nach Anspruch 1, dadurch gekennzeichnet, daß die zweiten Phasen (A'_{boost}, C'_{boost}) erzeugt werden durch einen kapazitiven, negativen Auto-Anhub der ersten Phasen (B', D').

3. Schaltkreis nach Anspruch 2, dadurch gekennzeichnet, daß der zweite und dritte Schaltkreis (OSC2, OSC3) umfassen:
- Vorrichtungen (T7, T'7) zum Aufladen von zwei kapazitiven Polen ((C3, C'3) auf die Spannung VCC,
- Vorrichtungen (T4, T'4) zum selektiven Verbinden der zwei kapazitiven Pole mit Eingängen (7, 7'), wobei diese Eingänge die ersten Phasen (D', B') einlesen, wenn die ersten Phasen (D', B') zwischen der Spannung VCC und der Spannung 0 umschalten, so daß das Potential der zwei Phasen auf die Spannung 0 zurückgestellt wird, und
- logische Gatter (G5, G'5), deren Ausgänge mit den ersten Polen dieser Kapazitäten (C3, C'3) verbunden sind und zwischen der Spannung VCC und der Spannung 0 umschalten, wenn einmal die zweiten Phasen auf die Spannung 0 zurückgebracht wurden, um die zweiten Phasen auf eine negative Spannung zu bringen.

4. Schaltkreis nach Anspruch 3, dadurch gekennzeichnet, daß die Vorrichtungen (T4, T'4) zum selektiven Verbinden der zweiten Pole der Kapazitäten mit den Eingängen (7, 7') Transistoren sind, deren Steuergates gesteuert werden durch den kapazitiven, negativen Auto-Anhub der ersten Phasen (D', B').

## Claims

1. Phase generator circuit for a negative power supply circuit of the charge pump type, this circuit producing cyclically a first and a second pair ((A'_{boost}, B'); (C'_{boost}, D')) of phases, comprising a first circuit (OSC1) for producing a first phase (B', D') of each pair of phases, these first phases being non-overlapping in the low state and switching between a 0 voltage and a voltage VCC, and second and third circuits (OSC2, OSC3) for producing, from the first phases (B', D') respectively the second phase (A'_{boost}, C'_{boost}) of the first and second pair of phases, each second phase (A'_{boost,} C'_{boost}) being non-overlapping in the low state with the first phase (B', D') of their respective pair and switching between a negative voltage -V and the voltage VCC.

2. Circuit according to Claim 1, characterised in that the second phases (A'_{boost,} C'_{boost}) are produced by negative capacitive auto-elevation of the first phases (B', D').

3. Circuit according to Claim 2, characterised in that the second and third circuits (OSC2, OSC3) comprise:
- means (T7, T'7) of precharging second poles of capacitors (C3, C'3) at the voltage VCC,
- means (T4, T'4) for selectively connecting the second poles of the capacitors to inputs (7, 7'), these inputs receiving the first phases (D', B'), when the first phases (D', B') switch from the voltage VCC to 0 voltage, so as to retum the potential of the second phases to 0 voltage, and
- logic gates (G5, G'5) whose outputs are connected to the first poles of these capacitors (C3, C'3) and switch from the voltage VCC to 0 voltage, once the second phases have returned to 0 voltage, in order to bring these second phases to a negative voltage.

4. Circuit according to Claim 3, characterised in that the means (T4, T'4) for selectively connecting the second poles of the capacitors to the inputs (7, 7') are transistors whose control gates are controlled by negative capacitive auto-elevation of the first phases (D', B').
